# EUROPÄISCHE PATENTSCHRIFT

(11) **EP 1 393 945 B1**
(45) Veröffentlichungstag und Bekanntmachung des Hinweises auf die Patenterteilung: **17.12.2008**
(21) Anmeldenummer: 03018149.9
(22) Anmeldetag: 08.08.2003
(51) Int. Cl.: B60J 7/043

(54) **Fahrzeugdach mit einem die Dachhaut verschliessenden nach hinten verschiebbaren Deckel**
Vehicle roof with a closing panel being slidable in a rear direction
Toit de véhicule avec un panneau de fermeture coulissant vers l'arrière

(30) Priorität: 29.08.2002 DE 10239863
(43) Veröffentlichungstag der Anmeldung: 03.03.2004
(73) Patentinhaber: Webasto AG, 82131 Stockdorf (DE)
(72) Erfinder: Engl, Andreas, 80469 München (DE)

(56) Entgegenhaltungen:
- DE-A- 10 211 860
- DE-C- 19 713 347
- JP-A- 61 016 126
- US-A- 4 968 088

## Beschreibung

Die Erfindung betrifft ein Fahrzeugdach nach dem Oberbegriff des Anspruchs 1 sowie ein damit ausgestattetes Fahrzeug.

Ein derartiges Fahrzeugdach (Hebeschiebedach) ist beispielsweise aus der Deutschen Patentschrift DE 197 13 347 C1 bekannt. Im ausgestellten und nach hinten verschobenen Zustand wird der Deckel dieses bekannten Daches mittels zweier jeweils seitlich im Bereich der Deckelhinterkante angelenkter Stützhebel abgestützt, deren untere Enden in unterhalb des Niveaus einer festen Dachhaut angeordneten Führungen verfahrbar sind und beim Austreten nach oben ein flexibles Dichtelement teilweise verdrängen, welches, in Querrichtung des Fahrzeugdaches betrachtet, zwischen einem jeweiligen Seitenholm der Fahrzeugkarosserie und einer festen Dachscheibe angeordnet ist. Diese Dachscheibe bildet einen hinter der Dachöffnung befindlichen Abschnitt der festen Dachhaut. Der seitlich äußere Bereich des Dichtelements dient hierbei auch als Zier- bzw. Ausgleichsblende zwischen dem in der Regel gekrümmt verlaufenden Seitenholm und der in der Regel geradlinig verlaufenden Seitenkante der festen Dachplatte.

Bei einer ähnlichen bekannten Konstruktion ist die Zier- bzw. Ausgleichsblende von einem separaten Teil gebildet, welches sich zwischen einem verdrängbaren Dichtelement und dem Seitenholm erstreckt.

Bei den bekannten Fahrzeugdächern ist die Freiheit bei der Gestaltung des seitlichen Randbereichs des Daches durch das Vorsehen der seitlichen Führungsschiene stark eingeschränkt. Die Anordnung der Führungsschiene in Querrichtung des Fahrzeugdaches betrachtet zwischen dem jeweiligen Seitenholm und einer festen Dachplatte bedingt eine relativ große Breite des Dichtelements bzw. der Ausgleichsblende, um den an dieser Stelle typischerweise befindlichen Dachgraben zum Seitenholm hin zu schließen. Außerdem kann hierbei der seitliche Rand der festen Dachplatte bzw. des Deckels nicht bis in den Bereich des Seitenholms sich erstreckend ausgelegt werden.

Es ist eine Aufgabe der vorliegenden Erfindung, ein Fahrzeugdach der eingangs genannten Art bereit zu stellen, welches eine größere Freiheit bei der Gestaltung des seitlichen Randbereichs des Daches bietet.

Diese Aufgabe wird gelöst durch ein Fahrzeugdach mit den Merkmalen des Anspruchs 1. Die abhängigen Ansprüche betreffen vorteilhafte Weiterbildungen der Erfindung.

Bei dem erfindungsgemäßen Fahrzeugdach ist vorgesehen, dass der Stützhebel sowie die Führungsschiene in Querrichtung des Fahrzeugdaches betrachtet im Wesentlichen mittig angeordnet sind. Damit entfällt die Notwendigkeit einer Abstützung des Deckels an dessen seitlichen Rändern, so dass in diesem Bereich kein Bauraum für eine Führungsschiene samt Stützhebel und Komponenten zur Festlegung der Führungsschiene benötigt werden. Somit entfällt auch die Notwendigkeit für eine übermäßig breite Zierblende am seitlichen Rand des Daches und es ist insbesondere möglich, einen Deckel vorzusehen, der sich seitlich bis in den Bereich des Seitenholms erstreckt. Dies ist vor allem bei einer Ausführung des Daches als so genanntes "Panoramadach" interessant, d.h. bei einer zum größten Teil transparenten Dachfläche. Auch bei einem relativ breiten Deckel ist es ohne bauliche Probleme möglich, eine feste Dachplatte mit gleicher Breite wie den Deckel vorzusehen, so dass Deckel und Dachplatte - in Längsrichtung des Daches betrachtet - bündig sind, was das optische Erscheinungsbild des Fahrzeugdaches verbessert. Ein weiterer Vorteil der Erfindung besteht darin, dass bei Verwendung einer einzigen (zentralen) Führungsschiene samt Stützhebel gegenüber dem erwähnten Stand der Technik eine Führungsschiene samt Stützhebel eingespart wird. Der Aufbau kann also vereinfacht werden. Zur Erhöhung der Abstützungsfestigkeit ist es jedoch prinzipiell auch denkbar, zwei Abstützhebel vorzusehen, die auf der Fahrzeuglängsmittellinie zu einer zentralen Abstützeinheit zusammengefasst sind und in zwei separaten oder einer zentralen Führungsschiene verfahrbar sind.

Zur Anordnung der Führungsschiene unterhalb der Dachhaut, z.B. einer festen Dachhaut, ist es denkbar, diese Dachhaut einstückig auszubilden und mit einer in Längsrichtung verlaufenden Nut zur abgesenkten Aufnahme der Führungsschiene zu versehen. Diese Ausführung bietet inhärente Vorteile im Hinblick auf die Wasserdichtigkeit des Fahrzeugdaches (bzw. "Wassermanagement"), da eine solche mit einer Nut versehende Dachhaut in einfacher Weise und insbesondere ohne besondere Abdichtungsmaßnahmen bereits eine Wasserablauffunktion erfüllen kann. Dennoch kann die Führungsschiene in diesem Fall von einem flexiblen Dichtelement abgedeckt sein, welches beim Ausstellen und Verschieben des Deckels vom nach oben austretenden Stützhebel zumindest teilweise verdrängt wird. Ein solches Dichtelement kann zu einem glattflächigen Erscheinungsbild des Fahrzeugdaches beitragen und wird dann auch wesentlich der Ästhetik des Daches dienen.

In einer alternativen Ausführungsform ist die hinter der Dachöffnung befindliche Dachhaut zur Bereitstellung eines Spalts zum Durchtritt des Stützhebels geteilt ausgebildet, beispielsweise in Form von zwei Fahrzeugdach-Festelementen, welche diesen Spalt als in Längsrichtung verlaufende Fuge bereitstellen, unter welcher die Führungsschiene angeordnet ist und beispielsweise an den Festelementen unmittelbar oder mittels eines Trägerteils befestigt ist. Eine Wasserablauffunktion kann bei dieser Ausführungsform durch die Führungsschiene selbst und/oder den ggf. vorgesehenen Träger geschaffen werden. Im Hinblick auf die Wasserdichtigkeit wie auch das optische Erscheinungsbild ist auch bei dieser Ausführung ein flexibles Dichtelement, wie oben erwähnt (zur Spaltabdeckung), wieder von Vorteil.

Der hinter der Dachöffnung liegende Bereich des Fahrzeugdaches kann als fest installierter, unbeweglicher Dachhautabschnitt ausgebildet sein. Alternativ kann auch in diesem Bereich ein verlagerbarer Dachhautabschnitt vorgesehen sein, z.B. können die oben erwähnten hinteren zwei Fahrzeugdach-Festelemente komplett aus dem Dachrahmenbereich der Fahrzeugkarosserie herausnehmbar sein und/oder im installierten Zustand aus der Dachhautebene heraus verschwenkbar und/oder anheb- oder absenkbar im Dachrahmen gelagert sein. Bei dieser Alternative kann die Führungsschiene z.B. an einem festen, in Fahrzeuglängsrichtung (auf der Fahrzeuglängsmittelachse) verlaufenden Steg des Daches befestigt sein.

Ein Spalt zum Durchtritt des Abstützhebels kann alternativ auch als Schlitz einer einteiligen hinteren Dachplatte ausgebildet sein, der sich vom hinteren Rand der Dachöffnung bis in einen mittleren Bereich dieser Dachplatte erstreckt. Der Spalt muß sich also nicht zwingend nach hinten bis zu einem hinteren Querträger des Dachrahmens der Fahrzeugkarosserie erstrecken.

In einer besonderen Ausführungsform ist vorgesehen, dass ein hinter der Dachöffnung befindlicher Abschnitt der Dachhaut von einer transparenten Dachplatte (mit Längsnut oder Längsspalt, z.B. zweiteilig) gebildet ist, die sich seitlich bis in den Bereich eines Seitenholms einer Fahrzeugkarosserie erstreckt. Eine solche, beispielsweise aus Glas oder Kunststoff hergestellte Dachplatte kann z.B. einteilig mit einer Aufnahmenut zur Aufnahme der Führungsschiene oder zweiteilig mit einer unterhalb einer Trennfuge angeordneten Führungsschiene ausgebildet sein. Jedenfalls ermöglicht diese Ausführung eine besonders hohe Lichtdurchlässigkeit des hinteren Fahrzeugdachbereichs.

Eine Erstreckung der Dachplatte "bis in den Bereich eines Seitenholms" bedeutet insbesondere, dass der seitliche Dachplattenrand einen nach innen gerichteten Randabschnitt des betreffenden Seitenholms wenigstens teilweise überlappt. Bei gängigen Seitenholmkonstruktionen wird ein solcher innen liegender Holmabschnitt beispielsweise von einem im Wesentlichen horizontal verlaufenden Tragrand gebildet, der z.B. als Auflagefläche für ein als Fertigmodul ausgebildetes Fahrzeugdach dienen kann.

In einer weiter bevorzugten Ausführungsform ist der Deckel transparent. Auch ein solcher Deckel kann sich vorteilhaft seitlich bis in den Bereich eines Seitenholms erstrecken, um eine hohe Lichtdurchlässigkeit in einem vorderen Fahrzeugdachbereich zu gewährleisten.

In einer noch weiter bevorzugten Ausführungsform ist sowohl ein hinter der Dachöffnung befindlicher Abschnitt (z.B. fester Dachhautabschnitt) als auch der Deckel transparent. Das Fahrzeugdach kann dann als Panoramadach ausgebildet sein, bei welchem ein Großteil der Dachfläche transparent ist. Bei dieser Ausführung ist es zur Erzielung eines ansprechenden optischen Erscheinungsbilds bevorzugt, den Dachabschnitt und den Deckel aus dem gleichen (transparenten) Material herzustellen.

Zur weiteren Verbesserung des Erscheinungsbilds ist es vorteilhaft, den hinteren Dachhautabschnitt als Dachplatte auszubilden, deren Breite der Breite des Deckels entspricht und deren Seitenrand geradlinig verläuft und bündig durch den Seitenrand des Deckels nach vorne hin fortgesetzt wird. Durch die erfindungsgemäße Abstützung des Deckels kann dieser gemeinsame seitliche Rand dann in Querrichtung des Fahrzeugs betrachtet sehr weit außen verlaufen, insbesondere einen Tragrand des Seitenholms einer Fahrzeugkarosserie überlappen. Eine Zierleiste zur Überbrückung eines Dachgrabens kann dann sehr schmal vorgesehen sein bzw. ganz entfallen, wenn der Seitenholm eine geradlinige Seitenwand bereitstellt.

Für eine kostengünstige Fahrzeugmontage ist es vorteilhaft, wenn der hintere Dachhautabschnitt an einem vorgefertigten, in den Dachrahmen einer Fahrzeugkarosserie montierbaren Modul ausgebildet ist, an welchem die Führungsschiene bereits integriert ist. Ein solches Dachmodul kann in an sich bekannter Weise am Randbereich Anbindungsflächen zur Befestigung (z.B. Verklebung) des Moduls am Dachrahmen aufweisen und kann bereits alle wesentlichen Komponenten des öffnungsfähigen Daches daran integriert aufweisen (Deckel, Deckelausstell- und Verschiebeführungen bzw. -kulissen, Deckeldichtungen, Antriebsmotor, Antriebskabel etc.).

Wenn die Führungsschiene unterhalb eines zwischen zwei festen Dachplatten bzw. Dachplattenabschnitten verbleibenden Längsschlitzes angeordnet ist, so kann an einem Dachmodul ferner wenigstens ein sich über die Dachbreite erstreckender Querträger integriert sein, in dessen Mitte die Führungsschiene gelagert bzw. befestigt ist. Alternativ oder zusätzlich kann zur Lagerung bzw. Befestigung der Führungsschiene auch ein Trägerelement unter der erwähnten Längsfuge angeordnet sein, welches zu beiden Seiten des Schlitzes an den Unterseiten der festen Dachplatten befestigt ist, insbesondere angeklebt ist.

Wenn die Führungsschiene unterhalb eines zwischen zwei verlagerbaren bzw. komplett abnehmbaren Dachplattenelementen verbleibenden Längsschlitzes angeordnet ist, so kann an dem Dachmodul ebenfalls wenigstens ein sich über die Dachbreite erstreckender Querträger integriert sein, in dessen Mitte die Führungsschiene gelagert bzw. befestigt ist. Alternativ oder zusätzlich kann zur Lagerung bzw. Befestigung der Führungsschiene auch ein Trägerelement unter der erwähnten Längsfuge angeordnet sein, welches zu beiden Seiten des Schlitzes auf dessen Oberseite mit Dichtungen versehen ist, welche zu den Unterseiten der Dachplattenelemente hin abdichten.
Die Erfindung wird nachfolgend anhand von Ausführungsbeispielen mit Bezug auf die beigefügten Zeichnungen weiter beschrieben. Es stellen dar:
- Fig. 1: eine schematische perspektivische Ansicht eines Fahrzeugdaches bei geschlossenem Deckel (Schließstellung),
- Fig. 2: eine schematische perspektivische Ansicht des Fahrzeugdaches von Fig. 1 in Offenstellung, nämlich bei vollständig geöffnetem Deckel,
- Fig. 3: eine schematische Seitenansicht des Fahrzeugdaches zur Veranschaulichung wesentlicher Komponenten einer Deckelabstützung, wobei der Deckel geschlossen ist,
- Fig. 4: eine der Fig. 3 entsprechende Ansicht in Offenstellung, nämlich bei teilweise geöffnetem Deckel,
- Fig. 5: eine teilweise Querschnittsansicht des Fahrzeugdaches in einem Bereich hinter der Dachöffnung, in welchem ein sich über die Dachbreite erstreckender Querträger verläuft,
- Fig. 6: eine teilweise Querschnittsansicht des Fahrzeugdaches in einem anderen Bereich hinter der Dachöffnung, in welchem eine Führungsschiene durch ein Trägerelement gelagert ist,
- Fig. 7: eine der Fig. 6 ähnliche Querschnittsansicht des Fahrzeugdaches, in welcher ein in der Führungsschiene geführter Stützhebel zu erkennen ist,
- Fig. 8: eine der Fig. 5 entsprechende Ansicht eines Fahrzeugdaches gemäß einer weiteren Ausführungsform, bei welcher zwei hintere Dachplattenelemente abnehmbar sind,
- Fig. 9: eine teilweise Querschnittsansicht des in Fig. 8 dargestellten Fahrzeugdaches in einem anderen Bereich hinter der Dachöffnung, in welchem eine Führungsschiene durch ein dachfestes Trägerelement gelagert ist, und
- Fig. 10: eine der Fig. 9 entsprechende Ansicht eines Fahrzeugdaches gemäß einer weiteren Ausführungsform, bei welcher ein die Führungsschiene abdeckender Dachhaut-Mittelsteg vorgesehen ist.

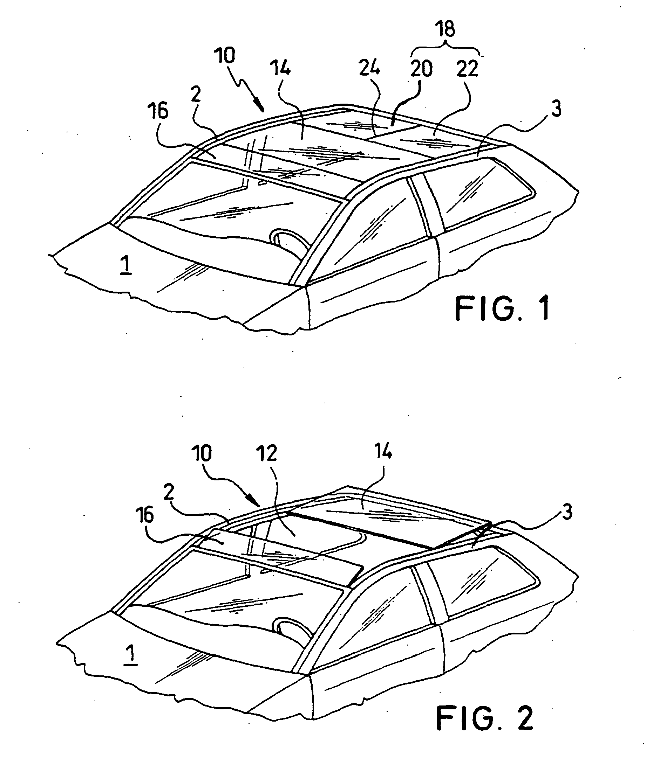

Die Fig. 1 und 2 zeigen ein insgesamt mit 10 bezeichnetes Fahrzeugdach im geschlossenen Zustand (Fig. 1) bzw. im vollständig geöffneten Zustand (Fig. 2).

Bei dem Dach 10 handelt es sich um ein Fertigmodul, welches bei der Fahrzeugmontage in den Dachrahmen einer Fahrzeugkarosserie 1 eingesetzt und befestigt wurde. Bei dem dargestellten Kraftfahrzeug ist dieser Dachrahmen gebildet von längsverlaufenden Seitenholmen 2, 3 sowie einem vorderen und einem hinteren querverlaufenden Holm.

Das Fahrzeugdach 10 umfasst in an sich für Hebeschiebedächer bekannter Weise eine in einer festen Dachhaut ausgebildete Dachöffnung 12, einen Schiebehebedeckel 14 und eine hier nicht dargestellte Verstelleinrichtung zum Verstellen des Deckels 14 zwischen der in Fig. 1 dargestellten Schließstellung, in welcher der Deckel 14 die Dachöffnung 12 verschließt, einer Lüftungsstellung (nicht dargestellt), in welcher der Deckel 14 aus seiner Schließstellung heraus mit seiner Hinterkante über die feste Dachhaut nach oben ausgestellt ist, und einer Offenstellung, in welcher der Deckel 14 über mindestens einen Teil seiner Längserstreckung über die Dachhaut nach hinten verschoben ist, beispielsweise in seine in Fig. 2 dargestellte hintere Endstellung.

Bei dem dargestellten Ausführungsbeispiel umfasst das Dach 10 ferner eine im vorderen Dachrahmenbereich angeordnete Windabweislamelle 16, welche durch die Verstelleinrichtung bei einer Öffnung des Deckels 14 in die Lüftungsstellung oder die Offenstellung zur Fahrtwindablenkung nach oben verschwenkt wird.

Das als transparentes Panoramadach-Komplettmodul in den Dachrahmen der Fahrzeugkarosserie 1 eingesetzte Fahrzeugdach 10 integriert die Windabweislamelle 16, den Deckel 14 samt Verstelleinrichtung sowie eine zweiteilig ausgebildete hintere feste Dachplatte 18, die aus zwei Dach-Festelementen 20, 22 zusammengesetzt ist und eine in Fahrzeuglängsrichtung verlaufende Fuge 24 ausbildet. Alternativ könnte anstatt der Fuge 24 auch ein nicht bis zum hinteren Rand einer einteiligen Dachplatte verlaufender Schlitz vorgesehen sein (falls der beabsichtigte Deckel-Verstellweg dies zulässt).

Selbstverständlich können auf der Unterseite des Daches 10 in an sich bekannter Weise Rolloeinrichtungen zum Sonnenschutz angeordnet sein, im hinteren Bereich des Daches z.B. zwei separate Rollos zur Abschattung unter den beiden Dach-Festelementen 20,22.

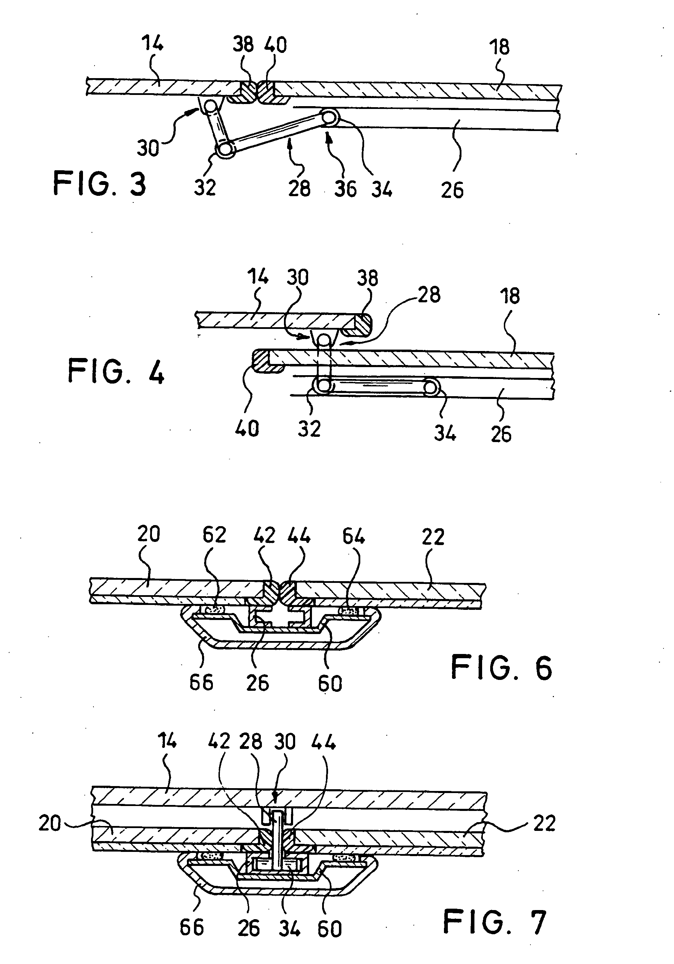

Unterhalb dieser Fuge 24 verläuft eine Führungsschiene 26 zur Führung eines Stützhebels 28 (vgl. Fig. 3 und 4), welcher den Deckel 14 in seiner Offenstellung (vgl. Fig. 2 und 4) nahe seiner Hinterkante abstützt.

Die Fig. 3 und 4 veranschaulichen schematisch die Anordnung der Führungsschiene 26 und des darin geführten Stützhebels 28. Der Stützhebel 28 ist im dargestellten Beispiel als geknickter Hebel ausgebildet, dessen vorderes Ende bei 30 an der Deckelunterseite verschwenkbar angelenkt ist und der im Knickbereich ein vorderes Gleitelement 32 und an seinem hinteren Ende ein hinteres Gleitelement 34 aufweist, welches bei 36 verschwenkbar und parallel zur Dachplatte 18 in Fahrzeuglängsrichtung verschiebbar in der Führungsschiene 26 gehalten ist.

In der Schließstellung des Deckels 14 gemäß Fig. 1 und 3 ergibt sich ein glattflächiges Erscheinungsbild des Fahrzeugdaches 10, wobei der Übergangsbereich zwischen dem Deckel 14 und der Dachplattenanordnung 18 durch an diesen Komponenten in an sich bekannter Weise angeordnete Randspaltdichtungen 38 bzw. 40 abgedichtet wird. Der Stützhebel 28 ist hierbei vollständig unterhalb der Dachfläche versenkt.

Der Deckel 14 kann ausgehend von der Schließstellung mittels einer an sich bekannten und daher hier nicht näher beschriebenen Verstelleinrichtung in eine Lüftungsstellung und weiter in eine Öffnungsstellung verlagert werden, so dass sich z.B. die in Fig. 4 dargestellte Situation ergibt, in welcher der Deckel 14 über einen Teil seiner Längserstreckung über die feste Dachhaut 18 nach hinten verschoben ist. Eine für das Ausstellen und Verschieben des Deckels 14 geeignete Mechanik ist beispielsweise in der Patentschrift DE 197 13 347 C1 beschrieben. Eine ebenfalls zur Verwendung bei der Erfindung geeignete Verstellmechanik findet sich z.B. in der Deutschen Patentschrift DE 42 38 946 C1.

Beim Öffnen des Fahrzeugdaches 10 ausgehend von der Schließstellung gemäß Fig. 3 wird der Deckel 14 mittels der Verstelleinrichtung zunächst um eine nahe seiner Vorderkante liegende Schwenkachse verschwenkt, so dass die Deckelhinterkante über die Dachhaut 18 nach oben ausgestellt wird, wobei es zu einer Verschwenkung des Stützhebels 28 um das im ständigen Eingriff mit der Führungsschiene 26 stehende hintere Gleitelement 34 kommt. Bei dieser Ausstellbewegung kommt es zu einem Anheben des vorderen Gleitelements 32, welches beim anschließenden Verschieben des Deckels 14 über die Dachplatte 18 in die Führungsschiene 26 einläuft und bei der weiteren Bewegung des Deckels 14 nach hinten zusammen mit dem hinteren Gleitelement 34 eine drehfeste, jedoch längs der Führungsschiene 26 verfahrbare Abstützung des Deckels 14 vorsieht. Der Deckel 14 ist dann an drei Punkten gehalten, nämlich durch zwei herkömmliche vordere Führungen und die hintere mittige Abstützung.

Beim Übergang von der Lüftungsstellung in die Offenstellung des Deckels 14 schwenkt das obere (deckelseitige) Ende des Stützhebels 28 unter lokaler Verdrängung von Randspaltdichtungen 42, 44 nach hinten und definiert in der Offenstellung des Deckels 14 einen über den weiteren Verstellweg konstanten Abstand der Anlenkung 30 von der Dachplatte 18 (vgl. Fig. 4 und 7).

Der Stützhebel 28 nimmt an der Ausstell- bzw. Absenkbewegung des Deckels 14 nur passiv teil. Getrieben wird diese Bewegung vielmehr mittels der beiderseits der Dachöffnung 12 unterhalb der Dachfläche angeordneten Verstelleinrichtung. Bei einem Verschieben des Deckels 14 nach hinten übernimmt der Stützhebel 28 die stabile Abstützung des Deckels 14 ab dem Moment, in dem sich beide Gleitelemente 32, 34 im Eingriff mit der Führungsschiene 26 befinden.

In der Offenstellung des Deckels 14 befinden sich die Gleitelemente 32, 34 auf gleicher Höhe. Diese Höhe kann gleich derjenigen Höhe sein, die das vordere Gleitelement 32 bei maximaler Deckelausstellung in der Lüftungsstellung einnimmt. Abhängig von der Gestaltung der Verstelleinrichtung kann letztere Höhe jedoch auch davon abweichend gewählt sein, solange nur gewährleistet ist, dass beim Übergang von der Lüftungsstellung in die Offenstellung die Höhe des vorderen Gleitelements 32 für ein zuverlässiges Einlaufen in die Führungsschiene 26 verändert wird bzw. das Einlaufen durch eine geeignet geformte Einlauffläche der Führungsschiene 26 sichergestellt ist.

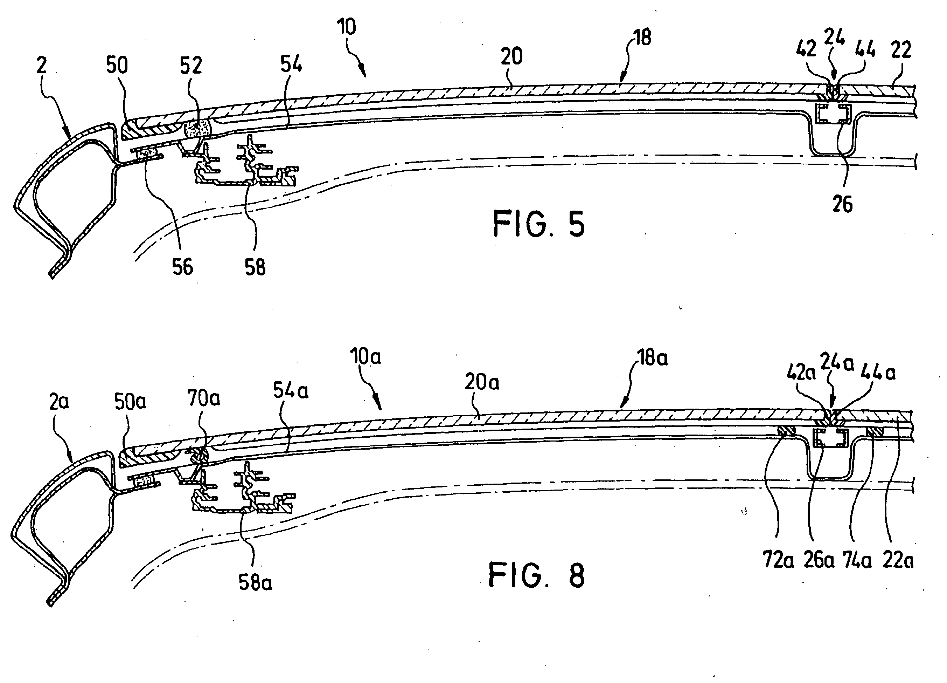

Fig. 5 zeigt das Fahrzeugdach 10 im Querschnitt von dem rechten Seitenholm 2 der Fahrzeugkarosserie 1 bis hin zu dem in Fahrzeugmitte liegenden Bereich. Das Fahrzeugdach 10 setzt sich in symmetrischer Weise bis hin zum rechten Seitenholm 3 fort (nicht dargestellt). Die Schnittebene von Fig. 5 verläuft in einem vorderen Bereich der zweiteiligen Dachplatte 18, die sich mit einer randseitigen Umschäumung (hier: PU) 50 bis in den Bereich des Seitenholms 2 erstreckt und über eine Verklebung 52 an einem Fahrzeugdach-Modulrahmen befestigt ist, der im dargestellten Bereich einen über die Dachbreite verlaufenden Querträger 54 ausbildet. Der Modulrahmen wird bei der Fahrzeugmontage im Dachrahmenbereich der Fahrzeugkarosserie 1 aufgesetzt und mit diesem verklebt. In der Figur ist beispielsweise eine Kleberaupe 56 ersichtlich, mit welcher ein Seitenrand des Querträgers 54 an der Oberseite eines innen liegenden Tragrands des Seitenholms 2 angebunden ist. Ferner erkennt man eine in Fahrzeuglängsrichtung verlaufende Profilstruktur 58, die einen Teil der erwähnten Verstelleinrichtung bildet und an der Unterseite des Modulrahmens angeschraubt ist. Im Bereich der Fahrzeuglängsmittellinie dient ein abgesenkter Bereich des Querträgers 54 zur Unterbringung der Führungsschiene 26 im Dachmodul. Da der seitliche Rand der Dachplatte 18 den Tragrand des Seitenholms 2 in Querrichtung überlappt, kann die Umschäumung 50 bzw. eine in diesem Bereich angeordnete Blende sehr schmal ausgeführt sein. Damit ergibt sich eine für die "Panoramawirkung" vorteilhafte, besonders hohe Lichtdurchlässigkeit des Daches 10. Prinzipiell denkbar ist es sogar, auf die Umschäumung 50 zu verzichten, insbesondere wenn der Dachgraben eine Wasserablauffunktion besitzt und nicht besonders abgedichtet werden muß.

Fig. 6 zeigt eine dem in Fig. 5 rechten Bereich (Fahrzeugmitte) entsprechende Schnittansicht in einem in Fahrzeuglängsrichtung betrachtet weiter hinten liegenden Bereich. Hier ist die Führungsschiene 26 in einem eigens hierfür vorgesehenem Trägerteil 60 aufgenommen, welches beiderseits der Fahrzeugmitte mittels Kleberaupen 62, 64 an der Unterseite der Dach-Festelemente 20 bzw. 22 fixiert ist und an der Unterseite mit einer Verkleidungsbahn 66 zum Fahrzeuginnenraum hin abgedeckt ist.

Fig. 7 ist eine der Fig. 6 entsprechende Ansicht bei geöffnetem Deckel 14, in welcher der Stützhebel 28 ersichtlich ist. Hieraus wird die zentrale Abstützung der Hinterkante des Deckels 14 in der Offenstellung deutlich, in welcher der Stützhebel 28 die Randspaltdichtungen 42, 44 lokal verdrängt.

Bei der nachfolgenden Beschreibung von weiteren Ausführungsbeispielen werden für analoge Komponenten die gleichen Bezugszahlen verwendet, jeweils ergänzt durch einen kleinen Buchstaben zur Unterscheidung der Ausführungsform. Dabei wird im Wesentlichen nur auf die Unterschiede zu dem bzw. den bereits beschriebenen Ausführungsbeispielen eingegangen und im übrigen hiermit ausdrücklich auf die Beschreibung vorangegangener Ausführungsbeispiele verwiesen.

Fig. 8 zeigt (ähnlich der Fig. 5) ein Fahrzeugdach 10a gemäß einer weiteren Ausführungsform. Im Gegensatz zu dem in Fig. 5 dargestellten Dach ist eine zweiteilige Dachplatte 18a (Elemente 20a, 22a) hier abnehmbar vorgesehen.

Die Dachplatte 18a ist mittels einer seitlich verlaufenden Dichtung 70a zu einem Fahrzeugdach-Modulrahmen hin abgedichtet, der im dargestellten Bereich wieder einen über die Dachbreite verlaufenden Querträger 54a ausbildet. Im mittleren Dachbereich erfolgt eine solche Abdichtung mittels beiderseits der Führungsschiene 26a verlaufenden Dichtungen 72a und 74a. Zum Halten der Dachplatten-Elemente 20a, 22a werden hier nicht dargestellte Halteeinrichtungen eingesetzt. In einer hier nicht näher beschriebenen Alternative sind die Elemente 20a, 22a als Ausstelldeckel vorgesehen, die vorne und/oder hinten über die Dachebene hinaus verschwenkt werden können.

Im Bereich der Fahrzeuglängsmittellinie dient wieder ein abgesenkter Bereich des Querträgers 54a zur Unterbringung der Führungsschiene 26a.

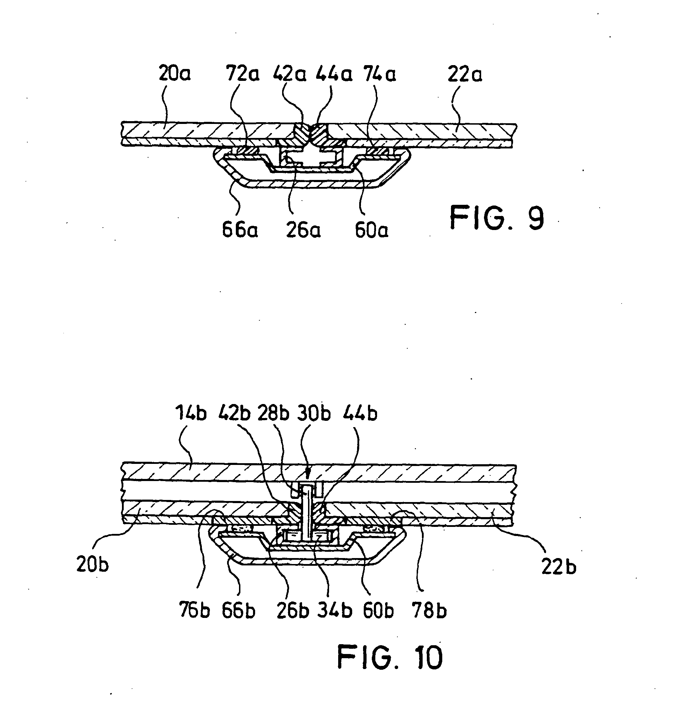

Fig. 9 zeigt eine dem in Fig. 8 rechten Bereich (Fahrzeugmitte) entsprechende Schnittansicht in einem in Fahrzeuglängsrichtung betrachtet weiter hinten liegenden Bereich. Hier ist die Führungsschiene 26a in einem eigens hierfür vorgesehenem Trägerteil 60a aufgenommen, welches beiderseits der Fahrzeugmitte mittels der Dichtungen 72a, 74a die Unterseite der Dach-Festelemente 20a bzw. 22a unterstützt und abdichtet.

Nach einem Abnehmen der Dachplatten-Elemente 20a, 22a liegt bei diesem Ausführungsbeispiel die Führungsschiene 26a nach oben hin frei. Um dies zu vermeiden, beispielsweise zur Verbesserung der Ästhetik, kann eine Ausführung gemäß Fig. 10 vorgesehen sein.

Fig. 10 ist eine der Fig. 9 (bzw. Fig. 6) entsprechende Ansicht bei geöffnetem Deckel 14b, in welcher wieder der Stützhebel 28b ersichtlich ist.

Zur Dachmitte hin enden zwei Dachplattenelemente 20b, 22b bei diesem Ausführungsbeispiel bereits etwa auf Höhe der seitlichen Ränder der zentralen Verkleidung. Die inneren Ränder der Elemente 20b, 22b liegen (über Dichtungen) an einem dachfest angeordneten Dach-Mittelsteg auf. Dieser Mittelsteg bildet einen festen Teil der hinter der Dachöffnung befindlichen Dachhaut und überbrückt den Raum zwischen den Elementrändern. In Fig. 10 ersichtlich sind zwei Mittelsteg-Hälften 76b, 78b, zwischen denen wieder eine verdrängbare Dichtungsanordnung 42b, 44b angeordnet ist und an deren Unterseiten über Kleberaupen das Trägerteil 60b angefügt ist.

Zusammenfassend sieht die Erfindung ein Fahrzeugdach vor mit einer in einer Dachhaut (20, 22) ausgebildeten Dachöffnung, einem Deckel (14) und einer Verstelleinrichtung zum Verstellen des Deckels (14) zwischen einer die Dachöffnung verschließenden Schließstellung, einer Lüftungsstellung, in welcher der Deckel (14) mit seiner Hinterkante über die Dachhaut (20, 22) nach oben ausgestellt ist, und einer Offenstellung, in welcher der Deckel (14) wenigstens teilweise über die Dachhaut (20, 22) nach hinten verschoben und an seinem hinteren Bereich mittels eines Stützhebels (28) abgestützt ist, der einerseits im hinteren Bereich des Deckels (14) angelenkt (30) ist und andererseits in einer unterhalb der Dachhaut (20, 22) angeordneten Führungsschiene (26) geführt ist, wobei zur Bereitstellung eines derartigen Fahrzeugdaches mit einer größeren Freiheit bei der Gestaltung des seitlichen Dachrandbereichs vorgesehen ist, dass der Stützhebel (28) sowie die Führungsschiene (26) in Querrichtung des Fahrzeugdaches betrachtet im Wesentlichen mittig angeordnet sind.

### Bezugszeichenliste

- 1: Fahrzeugkarosserie
- 2, 3: Seitenholme
- 10: Fahrzeugdach
- 12: Dachöffnung
- 14: Deckel
- 16: Windabweislamelle
- 18: zweiteilige Dachplatte
- 20, 22: Dachfestelemente
- 24: Fuge
- 26: Führungsschiene
- 28: Stützhebel
- 30: Anlenkung
- 32, 34: Gleitelemente
- 38, 40: Randspaltdichtungen zwischen Deckel und Dachplatte
- 42, 44: Randspaltdichtungen zwischen Dachfestelementen
- 50: Umschäumung
- 52: Verklebung
- 54: Querträger
- 56: Kleberaupe
- 58: Profilstruktur
- 60: Trägerteil
- 62, 64: Kleberaupen
- 66: Verkleidungsbahn
- 68: Kleberaupe
- 70: Dichtung
- 72: Dichtung
- 74: Dichtung
- 76: Dachmittelsteghälfte
- 78: Dachmittelsteghälfte

## Patentansprüche

1. Fahrzeugdach (10) mit einer in der Dachhaut (18) ausgebildeten Dachöffnung (12), einem Deckel (14) und einer Verstelleinrichtung zum Verstellen des Deckels (14) zwischen einer die Dachöffnung (12) verschließenden Schließstellung, einer Lüftungsstellung, in welcher der in seiner vorderen Endstellung stehende Deckel (14) durch Verschwenken um eine nahe seiner Vorderkante liegende Schwenkachse mit seiner Hinterkante über die Dachhaut (18) nach oben ausgestellt ist, und einer Offenstellung, in welcher der Deckel (14) über mindestens einen Teil seiner Längserstreckung über die Dachhaut nach hinten verschoben und an seinem hinteren Bereich mittels eines Stützhebels (28) abgestützt ist, der einerseits im hinteren Bereich des Deckels (14) angelenkt ist und andererseits in einer unterhalb der Dachhaut (18) angeordneten Führungsschiene (26) geführt ist, **dadurch gekennzeichnet, dass** der Stützhebel (28) sowie die Führungsschiene (26) in Querrichtung des Fahrzeugdaches (10) betrachtet im Wesentlichen mittig angeordnet sind.

2. Fahrzeugdach (10) nach Anspruch 1, wobei ein hinter der Dachöffnung (12) befindlicher Abschnitt der Dachhaut (18) von einer transparenten Dachplatte (20, 22) gebildet ist, die sich seitlich bis in den Bereich eines Seitenholms (2, 3) einer Fahrzeugkarosserie (1) erstreckt.

3. Fahrzeugdach (10) nach Anspruch 1 oder 2, wobei ein hinter der Dachöffnung (12) befindlicher Abschnitt der Dachhaut (18) und/oder der Deckel (14) transparent ist.

4. Fahrzeugdach (10) nach Anspruch 1, 2 oder 3, wobei die Dachhaut (18) an einem vorgefertigten, in den Dachrahmen einer Fahrzeugkarosserie (1) montierbaren Modul ausgebildet ist, an welchem ferner die Führungsschiene (26) integriert ist.

5. Fahrzeugdach (10) nach einem der Ansprüche 1 bis 4, wobei die Dachhaut (18) hinter der Dachöffnung als unbeweglicher fester Dachhautabschnitt ausgebildet ist.

6. Fahrzeugdach (10) nach einem der Ansprüche 1 bis 4, wobei die Dachhaut (18) hinter der Dachöffnung einen verlagerbaren Dachhautabschnitt aufweist.

7. Fahrzeug mit einem Fahrzeugdach (10) nach einem der Ansprüche 1 bis 6.

## Claims

1. Vehicle roof (10) with a roof opening (12) formed in the roof skin (18), with a cover (14) and with an adjusting device for adjusting the cover (14) between a closed position closing the roof opening (12), a ventilation position in which the cover (14), which is in its front end position, is deployed upwards with its rear edge over the roof skin (18) by pivoting about a pivot axis located in the vicinity of the front edge of said cover, and an open position in which the cover (14) is slid over at least part of its longitudinal extent in a rear direction over the roof skin and is supported at its rear region by means of a supporting lever (28) which is coupled at one end in the rear region of the cover (14) and is guided at the other end in a guide rail (26) arranged below the roof skin (18), **characterized in that** the supporting lever (28) and the guide rail (26) are arranged substantially centrally, as viewed in the transverse direction of the vehicle roof (10).

2. Vehicle roof (10) according to Claim 1, wherein a section of the roof skin (18) that is located behind the roof opening (12) is formed by a transparent roof plate (20, 22) which extends laterally into the region of a side strut (2, 3) of a vehicle body (1).

3. Vehicle roof (10) according to Claim 1 or 2, wherein a section of the roof skin (18) that is located behind the roof opening (12), and/or the cover (14) are/is transparent.

4. Vehicle roof (10) according to Claim 1, 2 or 3, wherein the roof skin (18) is formed on a premanufactured module which can be fitted into the roof frame of a vehicle body (1) and on which the guide rail (26) is furthermore integrated.

5. Vehicle roof (10) according to one of Claims 1 to 4, wherein the roof skin (18) is formed behind the roof opening as an immovable, fixed roof skin section.

6. Vehicle roof (10) according to one of Claims 1 to 4, wherein the roof skin (18) has a shiftable roof skin section behind the roof opening.

7. Vehicle with a vehicle roof (10) according to one of Claims 1 to 6.

## Revendications

1. Toit de véhicule (10) avec un toit ouvrant (12) réalisé dans la toiture (18), un panneau (14) et un dispositif de réglage pour régler le panneau (14) entre une position fermée fermant le toit ouvrant (12), une position d'aération dans laquelle le panneau (14) se trouvant dans sa position terminale avant est relevé vers le haut par pivotement autour d'un axe de pivotement situé à proximité de son bord avant, avec son bord arrière au-dessus de la toiture (18), et une position ouverte dans laquelle le panneau (14) est tiré vers l'arrière sur au moins une partie de son extension longitudinale au-dessus de la toiture et est soutenu au niveau de sa zone arrière à l'aide d'un levier d'appui (28) articulé d'une part dans la zone arrière du panneau (14) et guidé d'autre part dans un rail de guidage (26) disposé en dessous de la toiture (18), **caractérisé en ce que** le levier d'appui (28) ainsi que le rail de guidage (26) sont disposés pour l'essentiel au centre dans la direction transversale du toit de véhicule (10).

2. Toit de véhicule (10) selon la revendication 1, une section de la toiture (18) se trouvant derrière le toit ouvrant (12) étant formée par une plaque de toit (20, 22) transparente s'étendant latéralement jusque dans la zone d'une traverse latérale (2, 3) d'une carrosserie de véhicule (1).

3. Toit de véhicule (10) selon la revendication 1 ou 2, une section de la toiture (18) se trouvant derrière le toit ouvrant (12) et/ou le panneau (14) étant transparente.

4. Toit de véhicule (10) selon la revendication 1, 2 ou 3, la toiture (18) étant formée au niveau d'un module auquel le rail de guidage (26) est lui aussi intégré et ledit module pouvant être monté sur un cadre de toit préfabriqué d'une carrosserie de véhicule (1).

5. Toit de véhicule (10) selon l'une quelconque des revendications 1 à 4, la toiture (18) étant réalisée comme une section de toiture fixe immobile derrière le toit ouvrant.

6. Toit de véhicule (10) selon l'une quelconque des revendications 1 à 4, la toiture (18) comportant une section de toiture déplaçable derrière le toit ouvrant.

7. Véhicule doté d'un toit de véhicule (10) selon l'une quelconque des revendications 1 à 6.
